(19) Europäisches Patentamt / European Patent Office / Office européen des brevets

(11) **EP 1 994 275 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(21) Anmeldenummer: **07712097.0**

(22) Anmeldetag: **25.01.2007**

(51) Int Cl.:
*F02N 11/08* (2006.01)   *F02D 41/06* (2006.01)
*B60K 31/00* (2006.01)   *B60W 30/18* (2012.01)

(86) Internationale Anmeldenummer:
**PCT/EP2007/050710**

(87) Internationale Veröffentlichungsnummer:
**WO 2007/098999 (07.09.2007 Gazette 2007/36)**

(54) **VORRICHTUNG ZUM AN- UND ABSCHALTEN EINES FAHRZEUGMOTORS IN ABHÄNGIGKEIT VON DER VERKEHRSSITUATION**

DEVICE FOR SWITCHING ON AND SWITCHING OFF A VEHICLE ENGINE AS A FUNCTION OF THE TRAFFIC SITUATION

DISPOSITIF DE BRANCHEMENT ET DE DEBRANCHEMENT DU MOTEUR D'UN VÉHICULE EN FONCTION DE LA SITUATION DU TRAFIC

(84) Benannte Vertragsstaaten:
**DE FR GB IT**

(30) Priorität: **02.03.2006 DE 102006009654**

(43) Veröffentlichungstag der Anmeldung:
**26.11.2008 Patentblatt 2008/48**

(73) Patentinhaber: **Robert Bosch GmbH**
**70442 Stuttgart (DE)**

(72) Erfinder: **HOETZER, Dieter**
**48331 Farmington Hills (DE)**

(56) Entgegenhaltungen:
EP-A- 1 283 357   WO-A-02/063163
WO-A-03/001055   DE-A1- 10 041 789
DE-A1- 10 143 065   DE-A1- 10 234 064
US-B1- 6 283 086   US-B1- 6 629 515

**Beschreibung**

Stand der Technik

Die Erfindung betrifft eine Vorrichtung zum An- und Abschalten eines Motors eines Kraftfahrzeugs, mit einem Sensor zur Ortung eines Vorderfahrzeugs und einem Steuergerät zum An- und Abschalten des Motors in Abhängigkeit vom Bewegungszustand des Vorderfahrzeugs, wobei das Steuergerät dazu eingerichtet ist, das An- und Abschalten des Motors in Abhängigkeit vom Bewegungszustand mindestens eines weiteren Fahrzeugs in derselben Fahrspur zu steuern.

Eine Vorrichtung dieser Art ist aus WO 03/001055 A1 bekannt.

Aus DE 101 39 595 ist eine Vorrichtung bekannt, bei der der Bewegungszustand des Vorderfahrzeugs, d. h., des Fahrzeugs, das sich unmittelbar vor dem eigenen Fahrzeug befindet, mit Hilfe eines Radarsensors erfaßt wird. Wenn sowohl das Vorderfahrzeug als auch das eigene Fahrzeug stehen und der Stillstand des eigenen Fahrzeugs länger als eine vorgegebene Zeitspanne dauert, wird der Motor automatisch abgeschaltet. Wenn dann mit Hilfe des Radarsensors festgestellt wird, daß sich das Vorderfahrzeug wieder in Bewegung gesetzt hat, wird der Motor automatisch wieder angelassen. Durch diese Vorrichtung kann somit bei hohem Komfort für den Fahrer beispielsweise in Stop and Go Situationen bei einem Verkehrsstau eine beträchtliche Kraftstoffersparnis erreicht werden. Die Entscheidung über das An- und Abschalten des Motors braucht dabei nicht ausschließlich vom Bewegungszustand des Vorderfahrzeugs abhängig sein, sondern kann darüber hinaus auch von anderen Einflußgrößen abhängig sein, beispielsweise vom Bewegungszustand anderer Fahrzeuge, die sich auf Nebenspuren befinden (ein Anfahren der Fahrzeuge auf der Nebenspur deutet im allgemeinen auf die Auflösung eines Staus hin) oder auch vom Zustand einer Lichtzeichenanlage (Ampel), der mit Hilfe eines Videosystems erfaßt wird.

Bei dem Motor des Kraftfahrzeuges handelt es sich üblicherweise um eine Brennkraftmaschine, bei der der Anlaßvorgang eine gewisse Zeit in Anspruch nimmt. Da der Anlaßvorgang mit Hilfe der bekannten Vorrichtung erst dann eingeleitet wird, wenn eine Bewegung des Vorderfahrzeugs detektiert wird, kann es bei der Auflösung eines Staus zu unerwünschten Verzögerungen kommen. Andererseits kann es auch Situation geben, in denen das automatische Abschalten des Motors unter dem Gesichtspunkt der Kraftstoffersparnis ungünstig ist. Dies ist beispielsweise dann der Fall, wenn der Motor nach einem Stillstand von weniger als etwa drei Sekunden schon wieder angelassen werden muß. In diesem Fall kommt es auch zu einer unerwünschten Belastung des Anlassers und der Fahrzeugbatterie.

Offenbarung der Erfindung

Aufgabe der Erfindung ist es, eine Vorrichtung der oben genannten Art derart weiterzubilden, daß das An- und Abschalten des Motors situationsgerechter erfolgen kann.

Diese Aufgabe wird erfindungsgemäß mit den in Anspruch 1 angegebenen Merkmalen gelöst.

Zur Erfassung des Bewegungszustands des Vor-Vorderfahrzeugs und gegebenenfalls noch weiter vorn befindlicher Fahrzeuge ist ein Radarsensor besonders geeignet, da Radarsensoren, wie sie bei Kraftfahrzeugen häufig für eine automatische Abstandsregelung eingesetzt werden, in der Lage sind, das Vorderfahrzeug zu "untertunneln" und so das Vor-Vorderfahrzeug auch dann zu orten, wenn es für den Fahrer selbst durch das Vorderfahrzeug verdeckt ist.

Um eine möglichst große Kraftstoffersparnis zu erreichen, ist es beim Auffahren auf ein Stauende unter bestimmten Voraussetzungen zweckmäßig, den Motor bereits abzuschalten, bevor das eigene Fahrzeug zum Stillstand gekommen ist. Da allerdings moderne Kraftfahrzeuge üblicherweise mit einem Bremskraftverstärker ausgerüstet sind, dessen Wirkung nach dem Abschalten des Motors nur noch für eine begrenzte Zeit Tb anhält, sollte der Motor erst so spät abgeschaltet werden, daß das Fahrzeug zum Stillstand kommt, bevor die begrenzte Zeit abgelaufen ist. Der geeignete Zeitpunkt zum Abschalten des Motors ist dann vom Abstand des eigenen Fahrzeugs zum Vorderfahrzeug sowie von der momentanen Geschwindigkeit des eigenen Fahrzeugs, also vom Bewegungszustand des eigenen Fahrzeugs abhängig und nicht nur, wie beim Stand der Technik, von der Dauer des Stillstands des eigenen Fahrzeugs.

Vorteilhafte Weiterbildungen und Ausgestaltungen der Erfindung sind in den Unteransprüchen angegeben.

Bevorzugt werden durch das Steuergerät der erfindungsgemäßen Vorrichtung sowohl die Bewegungszustände von vor dem Vorderfahrzeug vorhandenen weiteren Fahrzeugen als auch der Bewegungszustand des eigenen Fahrzeugs berücksichtigt.

Wenn im Hinblick auf den Bewegungszustand des eigenen Fahrzeugs die Voraussetzungen für das Abschalten des Motors gegeben sind, sich in diesem Augenblick das Vor-Vorderfahrzeug jedoch bereits wieder in Bewegung gesetzt hat, ist es zur Vermeidung eines nur kurzzeitigen Motorstillstands zweckmäßig, den Abschaltvorgang zu unterbinden.

Ein Ausführungsbeispiel der Erfindung ist in den Zeichnungen dargestellt und in der nachfolgenden Beschreibung näher erläutert.

Es zeigen:

Figur 1        ein Blockdiagramm der erfindungsgemäßen Vorrichtung; und

Figuren 2 bis 4    schematische Darstellungen von Verkehrssituationen, zur Illustration der Wirkungsweise der Vorrichtung.

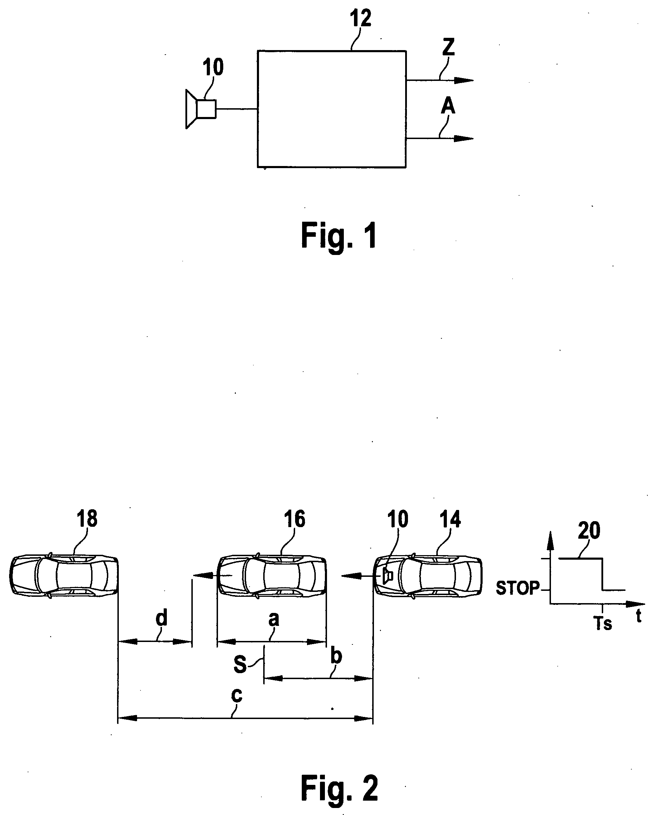

Die in Figur 1 gezeigte Vorrichtung zum automatischen An- und Abschalten des Motors eines Kraftfahrzeugs umfaßt einen Radarsensor 10 zur Ortung von Fahrzeugen im Vorfeld des eigenen Fahrzeugs sowie ein elektronisches Steuergerät 12, das die Signale des Radarsensors 10 sowie gegebenenfalls weitere die Verkehrssituation kennzeichnenden Informationen auswertet und in Abhängigkeit von diesen Informationen Signale Z und A an das Zündsystem und den Anlasser bzw. an entsprechende Hybridsteme, einen Starter-Generator oder dgl. des Fahrzeugs ausgibt, um die Anlaßund Abschaltvorgänge des Motors zu steuern.

Figur 2 illustriert eine Verkehrssituation, in der ein mit der Vorrichtung nach Figur 1 ausgerüstetes Fahrzeug 14 auf ein Vorderfahrzeug 16 auffährt, das seinerseits auf ein bereits stehendes Vor-Vorderfahrzeug 18 auffährt. Der Radarsensor 10 des Fahrzeugs 14 ist in der Lage, nicht nur den Abstand und die Relativgeschwindigkeit des unmittelbaren Vorderfahrzeugs 16 zu messen, sondern auch den Abstand und die Relativgeschwindigkeit des Vor-Vorderfahrzeugs 18. Das Steuergerät 12 erkennt daher, daß das Vor-Vorderfahrzeug 18 steht. Aus dem Stillstand dieses Fahrzeugs ist zu schließen, daß auch das Vorderfahrzeug 16 in einem angemessenen Abstand hinter dem Vor-Vorderfahrzeug 18 anhalten wird und letztlich auch das eigene Fahrzeug 14 in einem angemessenen Abstand zum Vorderfahrzeug 16 zum Stillstand kommen muß. In dieser Situation berechnet daher das Steuergerät 12 einen geeigneten Zeitpunkt Ts zum Abschalten des Motors des Fahrzeugs 14.

Der entsprechende zeitliche Verlauf eines Abschaltsignals 20 ist in Figur 2 in Diagrammform dargestellt. Dieses Abschaltsignal 20 hat zunächst einen hohen Wert entsprechend dem eingeschalteten Zustand des Motors und fällt dann zum Zeitpunkt Ts auf den Wert STOP ab. Es sei hier angenommen, daß das Fahrzeug 14 mit einem Bremskraftverstärker ausgerüstet ist, der zumindest bei längerem Betrieb von einer Energieversorgung durch den laufenden Motor des Fahrzeugs abhängig ist. Wenn der Motor abgeschaltet wird, kann der Bremskraftverstärker seinen Betrieb noch für eine begrenzte Aktivitätsdauer Tb aufrechterhalten. Die Berechnung des Abschaltzeitpunkts Ts erfolgt nun unter der Maßgabe, daß das Fahrzeug 14 an einem Anhaltepunkt S zum Stillstand kommen muß, bevor die begrenzte Aktivitätsdauer Tb des Bremskraftverstärkers abgelaufen ist.

Wenn a die Länge des Vorderfahrzeugs 16 ist (in der Praxis kann für a ein fester Wert entsprechend der typischen Länge eines PKW angenommen werden), b der momentane Abstand des Fahrzeugs 14 zum Anhaltepunkt S ist, c der momentane Abstand des Fahrzeugs 14 zum Vor-Vorderfahrzeug 18 ist und d der übliche Anhalteabstand zwischen Fahrzeugen in einer stehenden Kolonne ist (typischerweise 3 m), so gilt die Beziehung:

$$b = c - a - 2d.$$

Wenn v die Momentangeschwindigkeit des Fahrzeugs 14 ist und man bis zum Stillstand des Fahrzeugs 14 eine konstante Bremsverzögerung annimmt, so gilt für die verbleibende Anhaltezeit Ta des Fahrzeugs 14:

$$Ta = 2 * b/v.$$

Die Bedingung dafür, daß der Bremskraftverstärker noch während der gesamten Anhaltezeit Ta wirksam sein kann, lautet:

$$Ta < Tb$$

oder äquivalent:

$$Ta + Td \leq Tb,$$

mit einem geeigneten Sicherheitszeitzuschlag Td.

In den oben angegebenen Formeln sind die Größen b, c und v und folglich auch Ta zeitabhängige Funktionen. Die Bestimmung des Abschaltzeitpunkts Ts durch das Steuergerät 12 kann nun beispielsweise in der Form erfolgen, daß das Steuergerät 12 zyklisch die Anhaltezeit Ta anhand der aktuellen Werte für b, c und v berechnet, und prüft, ob die Bedingung Ta + Td $\leq$ Tb erfüllt ist. Bei großen Abständen c wird dies noch nicht der Fall sein. Wenn die genannte Bedingung erstmals erfüllt ist, gibt das Steuergerät 12 ein Signal zum Abschalten des Motors aus.

Auf analoge Weise kann das Steuergerät 12 die Abschaltung des Motors steuern, wenn das Vor-Vorderfahrzeug 18 nicht vorhanden ist aber das Vorderfahrzeug 16 steht. In dem Fall ist die Anhaltezeit Ta in Abhängigkeit vom Abstand des Fahrzeugs 14 zum stehenden Vorderfahrzeug 16 und dem Anhalteabstand d zu berechnen.

Auf diese Weise wird erreicht, daß in Verkehrssituationen, in denen eine Abschaltung des Motors angebracht ist, diese Abschaltung jeweils zum frühest möglichen Zeitpunkt erfolgt.

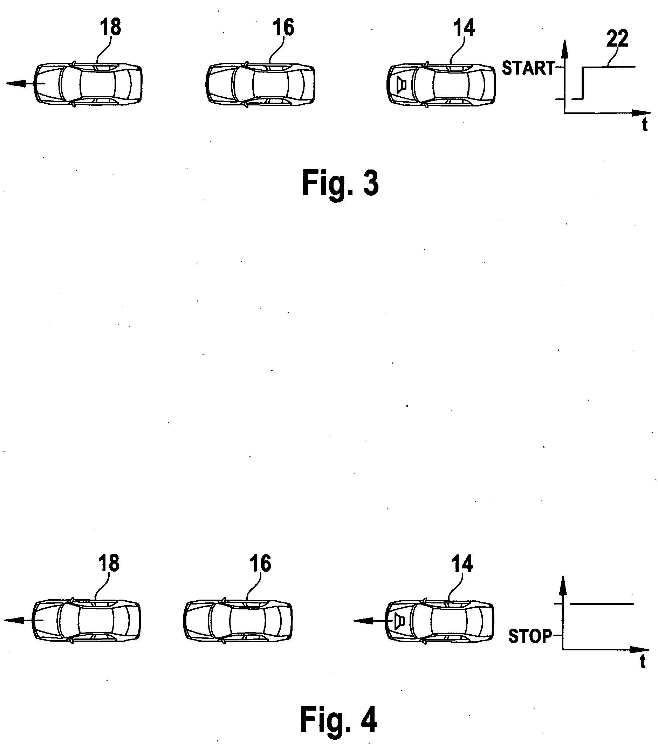

Figur 3 illustriert eine Verkehrssituation, in der ein Stau sich auflöst. Das Vor-Vorderfahrzeug 18 hat sich bereits in Bewegung gesetzt, während das Vorderfahrzeug 16 und das eigene Fahrzeug 14 noch stehen. In dieser Situation erkennt das Steuergerät 12 das Anfahren des Vor-Vorderfahrzeugs 18 und löst daraufhin unverzüglich das Anlassen des Motors aus, so daß das Fahrzeug 14 anfahrbereit ist, sobald sich auch das Vorderfahrzeug 16 in Bewegung setzt. Ein entsprechendes Einschaltsignal 22 zum Einschalten des Motors ist in Figur 3 wieder in Diagrammform dargestellt. Sobald das Anfahren des Vor-Vorderfahrzeugs 18 erkannt wird, nimmt dieses Signal einen hohen Wert START an.

Figur 4 illustriert eine Situation, in der das Fahrzeug 14 ähnlich wie in Figur 2 auf ein Stauende auffährt, der Stau bereits jedoch in Auflösung begriffen ist. Das Vor-Vorderfahrzeug 18 hat sich bereits wieder in Bewegung gesetzt, während das Vorderfahrzeug 16 noch steht. Das eigene Fahrzeug 14 fährt auf das Vorderfahrzeug 16 auf, und sein Motor ist noch nicht abgeschaltet. In dieser Situation erkennt das Steuergerät 12, daß das Vor-Vorderfahrzeug 18 bereits wieder angefahren ist, und unter dieser Bedingung wird die an sich vorgesehene Berechnung eines Abschaltzeitpunkts zum Abschalten des Motors des Fahrzeugs 14 unterbunden, weil davon auszugehen ist, daß sich auch das Vorderfahrzeug 16 alsbald wieder in Bewegung setzen wird, so daß auch das eigene Fahrzeug 14 die Fahrt fortsetzen kann. Auf diese Weise wird ein unökonomisches kurzfristiges Abschalten des Motors verhindert.

**Patentansprüche**

1. Vorrichtung zum An- und Abschalten eines Motors eines Kraftfahrzeugs (14), mit einem Sensor (10) zur Ortung eines Vorderfahrzeugs (16) und einem Steuergerät (12) zum An- und Abschalten des Motors in Abhängigkeit vom Bewegungszustand des Vorderfahrzeugs (16), wobei das Steuergerät (12) dazu eingerichtet ist, das An- und Abschalten des Motors in Abhängigkeit vom Bewegungszustand mindestens eines weiteren Fahrzeugs (14,18) in derselben Fahrspur zu steuern, **dadurch gekennzeichnet, daß** das weitere Fahrzeug oder eines der weiteren Fahrzeuge das eigene, mit der Vorrichtung ausgerüstete Fahrzeug (14) ist und daß das Steuergerät (12) dazu ausgebildet ist, wenn das Vorderfahrzeug (16) und/oder ein Vor-Vorderfahrzeug (18) steht, den Motor bereits abzuschalten, bevor das eigene Fahrzeug (14) zum Stillstand gekommen ist.

2. Vorrichtung nach Anspruch 1, **dadurch gekennzeichnet, daß** der Sensor (10) ein Radarsensor ist.

3. Vorrichtung nach Anspruch 1 oder 2, **dadurch gekennzeichnet, daß** das weitere Fahrzeug oder eines der weiteren Fahrzeuge ein von dem Sensor (10) geortetes Vor-Vorderfahrzeug (18) ist, das sich vor dem Vorderfahrzeug (16) befindet.

4. Vorrichtung nach Anspruch 3, **dadurch gekennzeichnet, daß** das Steuergerät (12) dazu ausgebildet ist, den Motor anzuschalten oder, falls der Motor noch angeschaltet ist, das Abschalten des Motors zu unterbinden, wenn das Vor-Vorderfahrzeug (18) in Bewegung ist.

5. Vorrichtung nach einem der vorstehenden Ansprüche , für Kraftfahrzeuge mit einem Bremskraftverstärker, der nach dem Abschalten des Motors noch für eine begrenzte Aktivitätsdauer (Tb) einsatzbereit ist, **dadurch gekennzeichnet, daß** das Steuergerät (12) dazu ausgebildet ist, einen Abschaltzeitpunkt (Ts) für den Motor so zu berechnen, daß das eigene Fahrzeug (14) nach dem Abschalten des Motors, bei fortgesetzter Betätigung des Bremse, an einem Anhaltepunkt (S) zum Stillstand kommt, bevor die Aktivitätsdauer (Tb) abgelaufen ist.

6. Vorrichtung nach Anspruch 5, **dadurch gekennzeichnet, daß** das Steuergerät (12) dazu ausgebildet ist, sofern ein Vor-Vorderfahrzeug (18) geortet wird, den Anhaltepunkt (S) in Abhängigkeit vom Abstand (c) zu diesem Vor-Vorderfahrzeug zu berechnen.

**Claims**

1. Device for switching on and off an engine of a motor vehicle (14), having a sensor (10) for determining the location of a vehicle (16) in front and a control device (12) for switching on and off the engine as a function of the state of the movement of the vehicle (16) in front, wherein the control device (12) is configured to control the switching on and off of the engine as a function of the state of movement of at least one further vehicle (14, 18) in the same lane, **characterized in that** the further vehicle or one of the further vehicles is the vehicle (14) in question which is equipped with the device, and **in that** the control device (12) is designed to switch off the engine even before the vehicle (14) in question has come to a standstill if the vehicle (16) in front and/or a vehicle (18) two in front are stationary.

2. Device according to Claim 1, **characterized in that** the sensor (10) is a radar sensor.

3. Device according to Claim 1 or 2, **characterized in that** the further vehicle or one of the further vehicles is a vehicle (18) which is two in front, whose location is determined by the sensor (10), and is located in front of the vehicle (16) in front.

4. Device according to Claim 3, **characterized in that** the control device (12) is designed to switch on the engine or, if the engine is still switched on, to prevent the engine from being switched off if the vehicle (18) two in front is moving.

5. Device according to one of the preceding claims, for motor vehicles having a brake booster which is still ready for use for a limited activation period (Tb) after the engine has been switched off, **characterized in that** the control device (12) is designed to calculate a switch-off time (Ts) for the engine in such a way that after the engine has been switched off and the brake continues to be activated the vehicle (14) in question comes to a standstill at a stopping point (S) before the activation period (Tb) has expired.

6. Device according to Claim 5, **characterized in that** the control device (12) is designed, if the location of a vehicle (18) two in front is determined, to calculate the stopping point (S) as a function of the distance (c) from this vehicle which is two in front.

## Revendications

1. Dispositif pour le démarrage et l'arrêt d'un moteur d'un véhicule (14), comportant un capteur (10) destiné à localiser un véhicule (16) situé à l'avant et un appareil de commande (12) destiné à démarrer et arrêter le moteur en fonction de l'état de déplacement du véhicule (16) situé à l'avant, dans lequel l'appareil de commande (12) est conçu pour commander le démarrage et l'arrêt du moteur en fonction de l'état de déplacement d'au moins un autre véhicule (14, 18) présent sur la même voie de circulation, **caractérisé en ce que** l'autre véhicule ou l'un des autres véhicules est le véhicule (14) lui-même équipé du dispositif et **en ce que** l' appareil de commande (12) est conçu, lorsque le véhicule (16) situé à l'avant et/ou lorsqu'un véhicule (18) situé à l'avant s'arrête, pour arrêter le moteur immédiatement avant même que le véhicule (14) lui-même s'immobilise.

2. Dispositif selon la revendication 1, **caractérisé en ce que** le capteur (10) est un capteur radar.

3. Dispositif selon la revendication 1 ou .2, **caractérisé en ce que** l'autre véhicule ou l'un des autres véhicules est un véhicule précédant le véhicule (18) situé à l'avant ayant été localisé par le capteur (10), qui précède le véhicule (16) situé à l'avant.

4. Dispositif selon la revendication 3, **caractérisé en ce que** l'appareil de commande (12) est conçu pour démarrer le moteur ou, dans le cas où le moteur est encore en marche, pour empêcher l'arrêt du moteur lorsque le véhicule (18) précédant le véhicule situé à l'avant est en mouvement.

5. Dispositif selon l'une quelconque des revendications précédentes, destiné à des véhicules munis d'un système d'assistance au freinage qui est encore prêt à l'utilisation pendant une durée d'activité (Tb) limitée après l'arrêt du moteur, **caractérisé en ce que** l'appareil de commande (12) est conçu pour calculer un point d'arrêt (Ts) du moteur, **en ce que** le véhicule (14) lui-même, après l'arrêt du moteur, lors d'un actionnement continu des freins, s'immobilise à un point d'arrêt (S), avant que la durée d'activité (Tb) se soit écoulée.

6. Dispositif selon la revendication 5, **caractérisé en ce que** l'appareil de commande (12) est conçu pour calculer le point d'arrêt (S) en fonction de la distance (c) le séparant dudit véhicule précédant le véhicule situé à l'avant lorsqu'un véhicule (18) précédant le véhicule situé à l'avant a été localisé.

**Fig. 1**

**Fig. 2**

**18** **16** **14**

START ────┌──── **22**
          │
      ────┘

t

## Fig. 3

**18** **16** **14**

─────────────

STOP ─────────

t

## Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03001055 A1
- DE 10139595